# FASCICULE DE BREVET EUROPEEN

(11) **EP 0 778 073 B1**
(45) Date de publication et mention de la délivrance du brevet: **20.02.2002**
(21) Numéro de dépôt: 96420339.2
(22) Date de dépôt: 27.11.1996
(51) Int. Cl.: B01D 63/06, B01D 29/52, B01D 46/24

(54) **Elément tubulaire inorganique de filtration présentant une surface de filtration et une résistance mécanique accrues**
Anorganisches rohrförmiges Filterelement mit hoher Filteroberfläche und Festigkeit
Inorganic tubular filter element having a high filtration surface and mechanical strength

(30) Priorité: 05.12.1995 FR 9514512
(43) Date de publication de la demande: 11.06.1997
(73) Titulaire: T.A.M.I. INDUSTRIES, F-26110 Nyons (FR)
(72) Inventeur: Grangeon, André, 84600 Valreas (FR); Lescoche, Philippe, 84110 Faucon (FR)
(74) Mandataire: Thibault, Jean-Marc

(56) Documents cités:
- EP-A- 0 686 424
- EP-A- 0 704 236
- WO-A-93/07959

## Description

La présente invention concerne le domaine technique de la séparation moléculaire ou particulaire mettant en oeuvre des éléments de séparation appelés généralement membranes et constitués à partir de matériaux inorganiques.

L'objet de l'invention vise, plus précisément, la réalisation d'un élément inorganique de filtration de forme générale tubulaire permettant de concentrer, trier ou extraire des espèces moléculaires ou particulaires contenues dans un milieu fluide qui exerce une pression donnée sur la membrane.

L'objet de l'invention trouve une application particulièrement avantageuse dans le domaine de la nanofiltration, l'ultrafiltration, la microfiltration, la filtration ou l'osmose inverse.

Dans l'état de la technique, il est connu de nombreuses membranes réalisées à partir d'éléments tubulaires de filtration. Ainsi, il est connu un élément de filtration de type multicanal comportant un support poreux rigide de forme allongée présentant une section droite polygonale ou circulaire. Le support poreux, qui est par exemple réalisé en céramique, est aménagé pour comporter une série de canaux parallèles entre-eux et à l'axe longitudinal du support poreux, présentant chacun une section droite transversale circulaire. La surface des canaux est recouverte d'au moins une couche séparatrice dont la nature et la morphologie sont adaptées pour assurer la séparation des molécules ou des particules contenues dans le milieu liquide circulant à l'intérieur des canaux. Une telle membrane réalise, par effet tami, une séparation des espèces moléculaires ou particulaires du produit à traiter, dans la mesure où toutes les molécules ou particules supérieures au diamètre des pores de la membrane sont arrêtées. Durant la séparation, le transfert du fluide s'effectue à travers la ou les couches séparatrices, puis le fluide se répand dans la porosité du support pour se diriger vers la surface extérieure du support poreux.

Un inconvénient majeur de ces éléments de filtration multicanaux réside dans le faible débit de filtrats obtenu. En effet, le trajet que doit suivre le filtrat, avant d'atteindre la surface extérieure du support, pour ce qui concerne les canaux situés dans la partie centrale du support, est beaucoup plus long que celui des autres canaux, notamment périphériques. De plus, les filtrats provenant des canaux de la région centrale du support récupèrent les filtrats provenant des autres canaux. Pour ces raisons, il apparaît une perte de charge pour le transfert du filtrat vers la surface extérieure du support. Cette perte de charge s'oppose à la pression du transfert et réduit la vitesse de passage.

Pour tenter de remédier à cet inconvénient, la demande de brevet **WO 93/07 959** a proposé un élément tubulaire de filtration dont les canaux présentent chacun une section droite transversale non circulaire. Selon un premier mode de réalisation, l'élément de filtration comporte un support poreux inorganique dans lequel les canaux sont ménagés parallèlement à l'axe central du support en étant disposés sensiblement selon un cercle coaxial à l'axe central. Chaque canal comporte, selon une section droite transversale, une paroi périphérique dirigée vers la surface extérieure du support en délimitant avec cette dernière, un couloir d'épaisseur constante assurant l'acheminement du filtrat. Chaque paroi périphérique est prolongée, de part et d'autre, par des parois radiales raccordées entre elles et délimitant chacune une cloison avec la paroi radiale en vis-à-vis d'un canal voisin. Le profil des canaux est choisi de manière à laisser subsister des cloisons s'évasant en forme de coin vers l'extérieur du substrat. Selon un deuxième mode de réalisation, les axes des canaux sont situés soit sur plusieurs cercles coaxiaux à l'axe du support, soit selon des couches parallèles les unes aux autres et à l'axe du support poreux. Selon ce deuxième mode de réalisation, les canaux voisins entre deux couches laissent subsister une cloison s'évasant également vers l'extérieur du substrat. Il s'avère ainsi que la forme en coin des cloisons délimitées entre les parois radiales favorisent le transfert du perméat vers la surface extérieure du support.

Il apparaît aussi qu'un tel élément permet, par la réalisation de canaux de section non circulaire, d'augmenter le rapport de la surface de filtration par rapport au volume du support poreux utilisé. Il doit toutefois être constaté qu'un tel élément présente un inconvénient majeur ayant trait à sa plus grande fragilité par rapport aux éléments connus antérieurs. En effet, dans un élément de filtration comportant des canaux de section circulaire, les efforts exercés par le fluide sur les parois des canaux se trouvent régulièrement répartis en raison de la section circulaire des canaux. Toutefois, le profil particulier des canaux de l'élément de filtration décrit par cette demande de brevet conduit à l'application d'efforts localisés sur certaines parties qui constituent des zones de cassure pour l'élément de filtration.

Les demandes de brevet EP 0 686 424 A et EP 0 704 236 A, qui appartiennent à l'état de la technique au sens de l'Article 54(3) CBE, decrivent des éléments inorganiques de filtration comportant un support rigide et des canaux ménagés dans ce support. Chaque canal possède une section droite transversale non circulaire et présente d'une part une paroi périphérique délimitant avec la surface extérieure du support un couloir d'acheminement du filtrat d'épaisseur constante et d'autre part au moins une paroi radiale, les parois étant reliées entre-elles par des congés de raccordement.

L'objet de l'invention vise donc à remédier aux inconvénients énoncés ci-dessus en proposant un élément inorganique multicanal de filtration d'un fluide conçu pour optimiser le rapport de la surface filtrante sur le volume de support poreux utilisé tout en conservant une bonne résistance mécanique à l'élément de filtration.

Pour atteindre cet objectif, l'élément inorganique selon l'invention comporte :
- un support poreux rigide inorganique de forme cylindrique présentant un axe central longitudinal,
- des canaux ménagés dans le support parallèlement à son axe central et présentant une surface recouverte par au moins une couche séparatrice destinée à être en contact avec le milieu fluide, au moins certains des canaux dits périphériques :
   . ayant leurs centres situés sur un cercle coaxial à l'axe central,
   . présentant, d'une part, une paroi périphérique située en regard de la surface extérieure du support et délimitant avec cette dernière, un couloir d'acheminement direct du filtrat et, d'autre part, au moins une paroi radiale délimitant une cloison avec la paroi radiale en regard d'un canal voisin, les parois étant reliées entre-elles par des congés de raccordement,
   . possédant chacun une section droite transversale non circulaire.

Selon l'invention, les canaux périphériques présentent chacun un couloir d'acheminement dont la partie s'étendant de part et d'autre du milieu du couloir et correspondant à la partie de la paroi phériphérique située directement en vis-à-vis avec la surface extérieure du support, présente une épaisseur qui augmente de part et d'autre de ce milieu du couloir et en direction opposée du milieu, de façon que chaque couloir d'acheminement possède une telle partie ayant un profil en forme de voûte en vue d'augmenter sa résistance mécanique.

Un autre inconvénient concernant l'élément de filtration décrit par le document **WO 93/07 959** concerne la réalisation, entre les parois radiales et

périphériques, de congés de raccordement présentant des angles de faible valeur. Dans ces conditions, il est constaté, au niveau des zones de raccordement, des dépôts de couches présentant une épaisseur différente de celle des dépôts de couche réalisés sur les autres parties des parois.

Pour remédier à cet inconvénient, les canaux sont délimités par des parois périphériques et radiales et des congés de raccordement, réalisés chacun selon des segments circulaires.

Selon une caractéristique avantageuse de l'invention, les canaux délimitent entre-eux des cloisons dont l'épaisseur augmente en direction de l'axe central du support poreux.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue en coupe transversale d'une variante de réalisation d'un élément de filtration conforme à l'invention.

Les **fig. 2** et **3** sont des vues en coupe illustrant deux autres variantes de réalisation de l'invention.

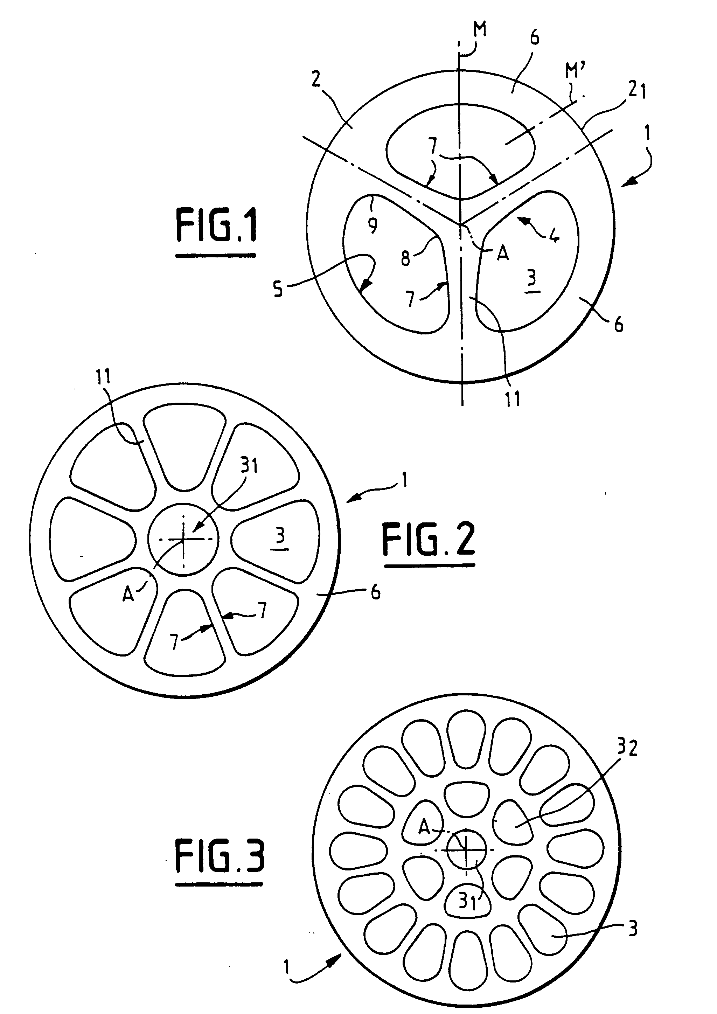

Tel que cela ressort de la **fig. 1,** l'élément inorganique de filtration **1** conforme à l'invention est adapté pour assurer la séparation ou la filtration de molécules ou de particules contenues dans un milieu fluide, de préférence liquide, de nature diverse comportant une phase solide ou non. L'élément de filtration **1** comporte un support poreux rigide inorganique **2** constitué dans une matière dont la résistance au transfert est adaptée à la séparation à effectuer. Le support **2** est réalisé à partir de matériaux inorganiques, tels que des oxydes métalliques, du carbone ou des métaux. Le support **2** est réalisé généralement sous une forme allongée ou d'un conduit s'étendant selon un axe central longitudinal **A.** Le support poreux **2** possède un diamètre moyen équivalent des pores compris entre 2 et 12 µm et, de préférence, de l'ordre de 5 µm. Le support **2** possède une section droite transversale hexagonale ou, comme dans l'exemple illustré à la **fig. 1**, circulaire. Le support **2** offre ainsi une surface extérieure **2**_{**1**} cylindrique.

Le support **2** est aménagé pour comporter au moins deux et, dans l'exemple de réalisation illustré à la **fig. 1,** trois canaux **3** réalisés parallèlement à l'axe **A** du support. Dans l'exemple illustré, les trois canaux **3** ont leur centre situé sur un cercle coaxial à l'axe central **A** du support et sont dits périphériques. Le support poreux **2** possède, selon cet exemple, un diamètre compris entre 9 et 14 mm et, de préférence, de l'ordre de 10 mm. Les canaux présentent chacun une surface **4** recouverte par au moins une couche séparatrice non représentée, destinée à être en contact avec le milieu fluide à traiter circulant à l'intérieur des canaux **3.** La nature de la ou des couches séparatrices est choisie en fonction du pouvoir de séparation ou de filtration à obtenir et forme avec le support une liaison intime, de façon que la pression provenant du milieu liquide soit transmise au support poreux **2.** Cette ou ces couches peuvent être déposées à partir par exemple de suspensions contenant au moins un oxyde métallique et classiquement utilisé dans la production des éléments de filtration minéraux. Cette ou ces couches sont soumises, après séchage, à une opération de frittage qui permet de les consolider et de les lier entre-elles ainsi qu'au support poreux **2.**

Chaque canal périphérique **3** possède une section droite transversale non circulaire qui est, de préférence, identique pour tous les canaux. Chaque canal **3** comporte une paroi périphérique **5** s'étendant directement en regard ou en vis-à-vis avec la surface externe **2**_{**1**} du support, afin de former un couloir **6** d'acheminement direct pour le filtrat. Chaque canal **3** comporte également au moins une, et dans l'exemple illustré, deux parois radiales **7** raccordées entre-elles par un congé de raccordement **8** et avec la paroi périphérique **5,** par l'intermédiaire de congés de raccordement **9.** Chaque paroi radiale **7** d'un canal **3** délimite, avec une paroi radiale **7** en regard d'un canal voisin, une cloison **11.**

Conformément à l'invention, les couloirs d'acheminement **6** présentent une épaisseur augmentant de part et d'autre du milieu **M** du couloir et en direction opposée de ce milieu, de façon que chaque couloir d'acheminement **6** possède un profil en forme de voûte ou de cintre permettant d'augmenter la résistance mécanique du couloir **6.** Dans l'exemple illustré, chaque couloir d'acheminement **6** possède une épaisseur qui augmente à partir sensiblement du milieu **M** du couloir et de part et d'autre de ce milieu. Le milieu peut être considéré comme le plan de symétrie du canal passant par l'axe **A** du support poreux. Bien entendu, il n'est pas à exclure que dans cette région **M,** l'épaisseur du couloir **6** soit sensiblement constante et augmente ensuite progressivement dans les deux directions opposées du milieu **M.** L'épaisseur du couloir **6** augmente entre le plan milieu **M** et le plan externe **M'** dans un rapport, par exemple, de l'ordre de 1,4.

De préférence, chaque couloir d'acheminement **6** possède une épaisseur qui augmente continûment ou continuellement à partir sensiblement du milieu du couloir et de part et d'autre de ce milieu. Les couloirs **6** assurent ainsi l'acheminement du filtrat en direction de la surface extérieure **2**_{**1**} du support poreux. La formation des couloirs d'acheminement avec une forme de voûte ou de cintre permet de leur conférer une résistance mécanique adaptée pour résister à la pression du fluide circulant à l'intérieur des canaux présentant des sections non circulaires.

Selon une caractéristique avantageuse de l'invention, les parois périphériques **5** et radiales **7** des canaux présentent chacune, comme cela apparaît clairement sur la **fig. 1**, en section droite transversale, un profil circulaire. De préférence encore, les congés de raccordement **8, 9** présentent aussi un profil circulaire. Chaque canal **3** présente ainsi, en section droite transversale, une succession d'arcs de cercles permettant d'obtenir des surfaces adaptées pour améliorer le dépôt des couches séparatrices. Selon une caractéristique avantageuse, le profil des parois radiales **7** est adapté de manière que chaque cloison **11** présente une épaisseur augmentant en direction de l'axe central **A.** La réalisation de cloisons **11**, dont l'épaisseur croît de l'extérieur vers l'intérieur du support **2** permet d'augmenter l'angle de raccordement entre les parois radiales **7** d'un même canal limitant ainsi la présence d'un congé de raccordement **8** altérant la qualité du dépôt des couches séparatrices.

Dans l'exemple illustré à la **fig. 1,** tous les canaux **3** sont dits périphériques, dans la mesure où ils se trouvent situés sur un cercle coaxial à l'axe **A.** Dans la mesure où tous les canaux **3** de l'élément selon l'invention présentent un couloir d'acheminement direct avec la surface externe **2**_{**1**}**,** la perte de charge lors du transfert du filtrat est considérablement réduite par rapport aux solutions techniques antérieures.

La **fig. 2** illustre un autre exemple de réalisation pour un élément inorganique **1** présentant un diamètre, par exemple, de l'ordre de 25 mm. Selon cet exemple, le support poreux **2** est aménagé pour comporter une série de canaux **3,** dits périphériques, au nombre de huit dans l'exemple illustré, dont leurs centres sont situés sur un même cercle coaxial à l'axe longitudinal **A** du support poreux **2.** Chaque canal **3** est ménagé de manière à laisser subsister un couloir d'acheminement **6,** en forme de cintre, comme illustré plus précisément à la **fig. 1**. Afin d'optimiser le rapport de la surface de filtration sur le volume de support poreux utilisé, l'élément de filtration **1** comporte un canal supplémentaire **3**_{**1**} centré sur l'axe longitudinal **A.** La réalisation d'un canal central **3**_{**1**} permet d'optimiser la surface de filtration tout en conservant une tenue mécanique adaptée à l'élément inorganique. Le canal central **3**_{**1**} possède, de préférence, une section droite transversale circulaire. Il est à noter que dans l'exemple illustré, les parois radiales **7** délimitent entre-elles des couloirs **11** d'épaisseur sensiblement constante.

La **fig. 3** illustre une variante de réalisation dans laquelle l'élément de filtration **1** comporte une série de canaux périphériques **3** placés selon un cercle coaxial à l'axe **A** et une deuxième série de canaux **3**_{**2**}**,** dits internes, placés également selon un cercle coaxial à l'axe **A.** Dans l'exemple illustré, les canaux périphériques **3** sont au nombre seize, tandis que le nombre de canaux internes **3**_{**2**} est égal à six. Il est à noter que la section droite transversale des canaux d'une même série est identique, mais différente d'une série à l'autre. Dans cet exemple, l'élément de filtration comporte également un canal central **3**_{**1**} qui présente, de préférence, une section droite transversale circulaire.

L'invention n'est pas limitée aux exemples décrits et représentés, car diverses modifications peuvent y être apportées sans sortir de son cadre, tel que défini par les revendications.

## Revendications

1. Elément inorganique de filtration d'un milieu fluide, en vue de récupérer un filtrat, du type comportant :
- un support (**2**) poreux rigide inorganique de forme cylindrique présentant un axe central longitudinal (**A**),
- des canaux (**3, 3**_{**1**}**, 3**_{**2**}) ménagés dans le support parallèlement à son axe central et présentant une surface recouverte par au moins une couche séparatrice destinée à être en contact avec le milieu fluide, au moins certains des canaux (**3**) dits périphériques :
. ayant leurs centres situés sur un cercle coaxial à l'axe central,
. présentant, d'une part, une paroi périphérique (**5**) située en regard de la surface extérieure du support et délimitant avec cette dernière, un couloir (**6**) d'acheminement direct du filtrat et, d'autre part, au moins une paroi (**7**) radiale délimitant une cloison (**11**) avec la paroi radiale en regard d'un canal voisin, les parois étant reliées entre-elles par des congés de raccordement (**8**, **9**),
. possédant chacun une section droite transversale non circulaire,
**caractérisé en ce que** les canaux périphériques (**3**) présentent chacun un couloir d'acheminement (**6**) dont la partie (M-M') s'étendant de part et d'autre du milieu (M) du couloir et correspondant à la partie de la paroi périphérique (5) située directement en vis-à-vis avec la surface extérieure (2₁) du support, présente une épaisseur qui augmente de part et d'autre de ce milieu (**M**) du couloir et en direction opposée du milieu, de façon que chaque couloir d'acheminement possède une telle partie ayant un profil en forme de voûte en vue d'augmenter sa résistance mécanique.

2. Elément inorganique selon la revendication 1, **caractérisé en ce que** chaque couloir d'acheminement (**6**) possède une épaisseur qui augmente à partir sensiblement du milieu du couloir **(M)** et de part et d'autre de ce milieu.

3. Elément inorganique selon la revendication 2, **caractérisé en ce que** chaque couloir d'acheminement **(6)** possède une épaisseur qui augmente continûment à partir sensiblement du milieu du couloir et de part et d'autre de ce milieu.

4. Elément inorganique selon la revendication 1, **caractérisé en ce que** les canaux **(3)** sont délimités par des parois périphériques **(5)** et radiales **(7)** et des congés de raccordement **(8, 9)**, présentant chacun un profil en arc de cercle.

5. Elément inorganique selon la revendication 1 ou 4, **caractérisé en ce que** les canaux (**3**) délimitent entre-eux des cloisons **(11)** dont l'épaisseur augmente en direction de l'axe central du support poreux.

6. Elément inorganique selon l'une des revendications 1 à 5, **caractérisé en ce qu'**il comporte uniquement des canaux périphériques (**3**) dont leurs centres sont situés sur un seul cercle coaxial à l'axe central du support.

7. Elément inorganique selon les revendications 1 à 6, **caractérisé en ce qu'**il comporte, en plus des canaux périphériques (**3**), au moins une rangée de canaux (**3**_{**2**}) dont leurs centres sont situés sur un cercle coaxial à l'axe central du support.

8. Elément inorganique selon l'une des revendications 1 à 5, **caractérisé en ce qu'**il comporte un canal central (**3**_{**1**}) centré sur l'axe du support.

9. Elément inorganique selon la revendication 8, **caractérisé en ce que** le canal central (**3**_{**1**}) possède une section droite transversale circulaire.

## Patentansprüche

1. Anorganisches Filterelement für flüssige Medien zur Gewinnung eines Filtrats, mit
- einem anorganischen, steifen, porösen Träger (2) in zylindrischer Form, der eine Mittellängsachse (A) aufweist,
- Kanälen (3, 3₁, 3₂), die im Träger parallel zu dessen Mittelachse ausgebildet sind und eine Oberfläche aufweisen, die von wenigstens einer Trennschicht bedeckt ist, die dazu bestimmt ist, mit dem flüssigen Medium in Verbindung zu stehen, wobei wenigstens einige der sogenannten peripheren Kanäle (3)
. ihren Mittelpunkt auf einem zur Mittelachse koaxialen Kreis haben,
. einerseits eine periphere Wand (5) aufweisen, die gegenüber der Außenfläche des Trägers liegt und mit dieser einen Gang (6) zur direkten Ableitung des Filtrats begrenzt, und andererseits wenigstens eine radiale Wand (7) aufweisen, die mit der gegenüberliegenden radialen Wand eines angrenzenden Kanals eine Trennwand (11) begrenzt, wobei die Wände miteinander durch Verbindungsübergänge (8, 9) verbunden sind,
. jeweils einen nicht kreisförmigen Querschnitt besitzen,
**dadurch gekennzeichnet, daß** jeder der peripheren Kanäle (3) einen Ableitungsgang (6) aufweist, bei dem der Teil (M-M'), der sich beiderseits der Gangmitte (M) erstreckt und dem Teil der peripheren Wand (5) entspricht, der der Außenfläche (2₁) des Trägers genau gegenüber liegt, eine Dicke aufweist, die beiderseits der Gangmitte (M) und in von der Mitte entgegengesetzter Richtung zunimmt, so daß jeder Ableitungsgang einen erheblichen Teil besitzt, der ein gewölbeförmiges Profil aufweist, um seine mechanische Festigkeit zu erhöhen.

2. Anorganisches Filterelement nach Anspruch 1,
**dadurch gekennzeichnet, daß** jeder Ableitungsgang (6) eine Dicke besitzt, die ausgehend im wesentlichen von der Gangmitte (M) beiderseits der Mitte zunimmt.

3. Anorganisches Filterelement nach Anspruch 2,
**dadurch gekennzeichnet, daß** jeder Ableitungsgang (6) eine Dicke besitzt, die ausgehend im wesentlichen von der Gangmitte beiderseits der Mitte kontinuierlich zunimmt,

4. Anorganisches Filterelement nach Anspruch 1,
**dadurch gekennzeichnet, daß** die Kanäle (3) durch periphere (5) und radiale (7) Wände und Verbindungsübergänge (8, 9) begrenzt sind, von denen jeder ein kreisbogenförmiges Profil aufweist.

5. Anorganisches Filterelement nach Anspruch 1 oder 4,
**dadurch gekennzeichnet, daß** die Kanäle (3) untereinander Trennwände (11) begrenzen, deren Dicke in Richtung auf die Mittelachse des porösen Trägers zunimmt.

6. Anorganisches Filterelement nach einem der Ansprüche 1 bis 5,
**dadurch gekennzeichnet, daß** es lediglich periphere Kanäle (3) umfaßt, deren Mittelpunkte auf einem einzigen zur Mittelachse des Trägers koaxialen Kreis liegen.

7. Anorganisches Filterelement nach einem der Anaprüche 1 bis 6,
**dadurch gekennzeichnet, daß** es zusätzlich zu den peripheren Kanälen (3) wenigstens eine Reihe Kanäle (3₂) umfaßt, deren Mittelpunkte auf einem zur Mittelachse des Trägers koaxialen Kreis liegen.

8. Anorganisches Filterelement nach einem der Ansprüche 1 bis 5,
**dadurch gekennzeichnet, daß** es einen auf die Achse des Trägers zentrierten Mittelkanal (3₁) umfaßt.

9. Anorganisches Filterelement nach Anspruch 8,
**dadurch gekennzeichnet, daß** der Mittelkanal (3₁) einen kreisförmigen Querschnitt aufweist.

## Claims

1. An inorganic filter element for filtering a fluid medium in order to recover a filtrate, the filter element being of the type comprising:
- an inorganic rigid porous support (2) of cylindrical shape having a longitudinal central axis (A); and
- channels (3, 3₁, 3₂) formed in the support parallel to its central axis and presenting respective surfaces each covered in at least one separator layer that is intended to come into contact with the fluid medium, and at least some "peripheral" ones of the channels (3) that:
. have their centres situated on a circle that is coaxial about the central axis;
. present both a peripheral wall (5) situated facing the outside surface of the support and co-operating therewith to define a direct through passage (6) for the filtrate, and at least one radial wall (7) co-operating with the facing radial wall of an adjacent channel to define a partition (11), the walls being interconnected by connection fillets (8, 9); and
. all possess a right cross-section that is non-circular,
**characterised in that** each of the peripheral channels (3) has a through passage (6) of which the part (M-M') extending on either side of the middle (M) of the passage and corresponding to the part of the peripheral wall (5) situated directly in facing relationship with the outside surface (2₁) of the support, is of a thickness that increases on either side of this middle (M) of the passage going away from the middle so that each through passage possesses such a part having a profile in the form of a vault for the purpose of increasing its mechanical strength.

2. An inorganic element according to claim 1, **characterised in that** each through passage (6) is of a thickness that increases from substantially the middle of the passage (M) and on either side of said middle.

3. An inorganic element according to claim 2, **characterised in that** each through passage (6) is of a thickness that increases continuously, substantially from the middle of the passage and on either side of said middle.

4. An inorganic element according to claim 1, **characterised in that** the channels (3) are defined by peripheral and radial walls (5, 7) respectively and by connection fillets (8, 9) each possessing a profile that is circularly arcuate.

5. An inorganic element according to claim 1 or 4, **characterised in that** the channels (3) define between them partitions (11) of thickness that increases towards the central axis of the porous support.

6. An inorganic element according to one of claims 1 to 5, **characterised in that** it comprises peripheral channels (3) only with their centres being situated on a single circle that is coaxial about the central axis of the support.

7. An inorganic element according to claims 1 to 6, **characterised in that** it includes, in addition to the peripheral channels (3), at least one row of channels (3₂) whose centres are situated on a circle that is coaxial about the central axis of the support.

8. An inorganic element according to one of claims 1 to 5, **characterised in that** it includes a central channel (3₁) centered on the axis of the support.

9. An inorganic element according to claim 8, **characterised in that** the central channel (3₁) has a right cross-section that is circular.
